(19) Europäisches Patentamt
European Patent Office
Office européen des brevets

(11) EP 2 500 370 A1

(12) **EUROPEAN PATENT APPLICATION**
published in accordance with Art. 153(4) EPC

(43) Date of publication:
**19.09.2012 Bulletin 2012/38**

(21) Application number: **10829896.9**

(22) Date of filing: **08.11.2010**

(51) Int Cl.:
***C08G 18/44*** *(2006.01)* ***C08G 18/00*** *(2006.01)*
***C09D 5/02*** *(2006.01)* ***C09D 169/00*** *(2006.01)*
***C09D 175/04*** *(2006.01)* ***D06N 3/14*** *(2006.01)*

(86) International application number:
**PCT/JP2010/069789**

(87) International publication number:
**WO 2011/058937 (19.05.2011 Gazette 2011/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2009 JP 2009257115**
**06.08.2010 JP 2010177086**

(71) Applicant: **Ube Industries, Ltd.**
**Ube-shi, Yamaguchi 755-8633 (JP)**

(72) Inventors:
- **YAMADA, Takeshi**
  **Yamaguchi 755-8633 (JP)**
- **NAIKI, Masahiro**
  **Yamaguchi 755-8633 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **AQUEOUS POLYURETHANE RESIN DISPERSION, PROCESS FOR PRODUCTION THEREOF, AND USE THEREOF**

(57) An object is to obtain an aqueous polyurethane resin dispersion which provides a coating film having high hardness, oleic acid resistance and solvent resistance.

The aqueous polyurethane resin dispersion comprises a polyurethane resin obtained by reacting (a) a polyol compound, (b) a polyisocyanate compound, (c) an acidic group-containing polyol compound and (d) a chain-elongating agent being dispersed in an aqueous medium, wherein (a) the polyol compound comprises a polycarbonate polyol compound represented by the formula (1), a hydroxyl equivalent of (a) the polyol compound and (c) the acidic group-containing polyol compound is 180 to 400, and a total acid value of (a) the polyol compound, (b) the polyisocyanate compound and (c) the acidic group-containing polyol compound is 22 to 40 mg KOH/g.

EP 2 500 370 A1

## Description

TECHNICAL FIELD

The present invention relates to an aqueous polyurethane resin dispersion, a process for preparing the same and use thereof.

BACKGROUND ART

An aqueous polyurethane resin dispersion has been widely utilized as a starting material for a paint or a coating agent, for example, a starting material for a paint or a coating agent for coating an outside and inside of an aircraft, automobile, etc., an external wall surface, a floor material and furniture of house, and synthetic leather to be used for clothes or a surface skin of sofa, etc. In addition, it has been also utilized as an adhesive by mixing with a rubber, etc. In the above-mentioned uses, a coating film obtained by the aqueous polyurethane resin dispersion has a role of not only appealing beauty of appearance, but also protecting the base material, so that it is required to have strength and durability. For these purposes, it has been earnestly desired to provide an aqueous polyurethane resin dispersion which gives a coating film having higher strength and higher durability.

To satisfy the above-mentioned properties, aqueous polyurethane resin dispersions using various kinds of polymer polyols have been developed. More specifically, as polymer polyols, a polyester polyol, polyether polyol, polycarbonate polyol, etc., have been used for the preparation of aqueous polyurethane resin dispersions. Among these, the polycarbonate polyol has a characteristic that provides a tough coating film as compared with those of the polyester polyol or polyether polyol. Above all, it has been known that an aqueous polyurethane resin dispersion prepared by using a polycarbonate diol having an alicyclic structure provides a coating film excellent in weather resistance and moist-heat resistance (Patent Literature 1).

Also, it has been reported that an aqueous polyurethane resin dispersion produced by using a polycarbonate diol comprising 1,4-butane diol which is a diol having 4 or less carbon atoms as a constitutional unit provides a coating film excellent in oil resistance (Patent Literature 2).

[Patent Literature 1] JP H06-248046A
[Patent Literature 2] JP 2008-303285A

DISCLOSURE OF THE INVENTION

PROBLEMS TO BE SOLVED BY THE INVENTION

However, the diol constituting the polycarbonate diol in Patent Literature 1 comprises a mixture of two components of 1,4-cyclohexane dimethanol and 1,6-hexane diol, or a diol mixture in which other diol(s) is/are used in addition to the above-mentioned two components. Therefore, whereas the coating film obtained by the aqueous polyurethane resin dispersion has sufficient hardness, there are problems that durability or dimensional stability against sebum contained in sweat (oleic acid resistance), and solvent resistance are not sufficient. On the other hand, the coating film obtained by the aqueous polyurethane resin dispersion using a polycarbonate diol which comprises 1,4-butane diol as a constitutional unit as shown in Patent Literature 2 involves the problems that it is flexible whereby its hardness is insufficient.

An object of the present invention is to obtain an aqueous polyurethane resin dispersion which gives a coating film or surface having high strength, as well as excellent oleic acid resistance and solvent resistance.

MEANS TO SOLVE THE PROBLEMS

The present inventors have earnestly studied to solve the above-mentioned problems, and as a result, they have found out that by using a polycarbonate polyol compound having a specific alicyclic structure as a starting polyol, an aqueous polyurethane resin dispersion which provides a coating film having high hardness as well as excellent oleic acid resistance and solvent resistance, whereby accomplished the present invention.

That is, the present invention has the following constitutions.

The present invention 1 is an aqueous polyurethane resin dispersion comprising a polyurethane resin obtained by reacting (a) a polyol compound, (b) a polyisocyanate compound, (c) an acidic group-containing polyol compound and (d) a chain-elongating agent being dispersed in an aqueous medium, wherein (a) the polyol compound contains a polycarbonate polyol compound represented by the formula (1):

[Formula 1]

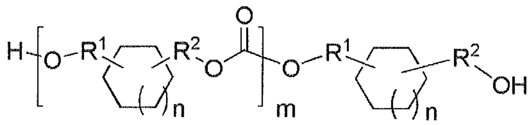

(1)

(wherein
$R^1$ and $R^2$ each independently represent a direct bond or an aliphatic hydrocarbon group having 1 to 10 carbon atoms which may have a substituent(s),
n is 0 or 1,
m is a number which makes a number average molecular weight of the formula (1) 400 to 2000),
a hydroxyl equivalent of (a) the polyol compound and (c) the acidic group-containing polyol compound being 180 to 400, and
a total acid value of (a) the polyol compound, (b) the polyisocyanate compound and (c) the acidic group-containing polyol compound being 22 to 40 mg KOH/g.
The present invention 2 relates to the above-mentioned aqueous polyurethane resin dispersion wherein a content of an alicyclic structure in (a) the polyol compound is 35 to 65% by weight.
The present invention 3 relates to the above-mentioned aqueous polyurethane resin dispersion wherein (a) the polyol compound is a polycarbonate polyol compound represented by the formula (1'):

[Formula 2]

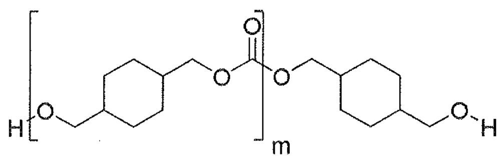

Formula (1')

(wherein m is a number which makes the number average molecular weight of the formula (1') 400 to 2000).
The present invention 4 relates to the above-mentioned aqueous polyurethane resin dispersion wherein the dispersion comprises a polyurethane resin which is obtained by reacting a prepolymer obtained by reacting (a) the polyol compound, (b) the polyisocyanate compound and (c) the acidic group-containing polyol compound, and (d) the chain-elongating agent being dispersed in an aqueous medium.
The present invention 5 relates to the above-mentioned aqueous polyurethane resin dispersion wherein the prepolymer is in the form of a prepolymer solution with 14000cP or lower at 80˚C.
The present invention 6 relates to the above-mentioned aqueous polyurethane resin dispersion wherein a molar ratio of the hydroxyl group derived from (a) the polyol compound and (c) the acidic group-containing polyol compound and the isocyanate group derived from (b) the polyisocyanate compound is 1:1.51 to 1:2.5.
The present invention 7 relates to a paint composition comprising the above-mentioned aqueous polyurethane resin dispersion.
The present invention 8 relates to a coating agent composition comprising the above-mentioned aqueous polyurethane resin dispersion.
The present invention 9 relates to a composition for a synthetic leather comprising the above-mentioned aqueous polyurethane resin dispersion.
The present invention 10 relates to a synthetic leather comprising a fiber base material treated by the above-mentioned composition for a synthetic leather.
Further, the present invention 11 relates to a process for preparing the above-mentioned aqueous polyurethane resin dispersion which comprises the steps of

(1) a step of preparing a prepolymer by reacting (a) the polyol compound, (b) the polyisocyanate compound and (c) the acidic group-containing polyol compound;
(2) a step of neutralizing an acidic group in the prepolymer with an acidic group-neutralizing agent;
(3) a step of dispersing the neutralized prepolymer in an aqueous medium; and
(4) a step of reacting the prepolymer dispersed in the aqueous medium and (d) a chain-elongating agent.

EFFECTS OF THE INVENTION

According to the aqueous polyurethane resin dispersion of the present invention, a coating film having high hardness as well as excellent oleic acid resistance and solvent resistance can be provided. Therefore, the aqueous polyurethane resin dispersion of the present invention can be an extremely excellent starting material for a paint or a coating agent. In particular, the coating film is tough to sweat, and also tough to wipe of stain using a solvent, in addition to the paint or the coating agent, it is also useful for a starting material for synthetic leather.

BEST MODE TO CARRY OUT THE INVENTION

The aqueous polyurethane resin dispersion of the present invention comprises a polyurethane resin obtained by reacting (a) a polyol compound, (b) a polyisocyanate compound, (c) an acidic group-containing polyol compound and (d) a chain-elongating agent being dispersed in an aqueous medium.

(a) The polyol compound comprises a polycarbonate polyol compound represented by the formula (1):

[Formula 3]

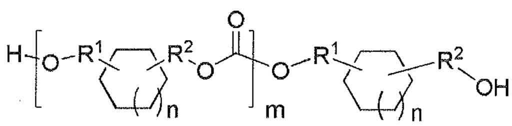

Formula ( 1 )

(wherein
$R^1$ and $R^2$ each independently represent a direct bond or an aliphatic hydrocarbon group having 1 to 10 carbon atoms which may have a substituent(s),
n is 0 or 1, and
m is a number which makes a number average molecular weight of the formula (1) 400 to 2000). In (a) the polyol compound, the polycarbonate polyol compound represented by the formula (1) is preferably 50% by weight or more, and more preferably 75% by weight or more. In the formula (1), the case where $R^1$ and $R^2$ are direct bonds means the carbon atom and the oxygen atom in the alicyclic structure are directly bonded.

The aliphatic hydrocarbon group having 1 to 10 carbon atoms of $R^1$ and $R^2$ in the formula (1) may be mentioned, for example, a straight or branched $C_1$ to $C_{10}$ alkylene group. The aliphatic hydrocarbon group having 1 to 10 carbon atoms may have a substituent(s), and the substituent(s) may be mentioned a substituent(s) which does/do not react with the isocyanate group.

$R^1$ and $R^2$ are preferably methylene groups in the points of reactivity with the hydroxyl group and the isocyanate group at the ends of the molecule, and a content of the alicyclic structure.

A number average molecular weight of the polycarbonate polyol compound represented by the formula (1) is 400 to 2000. If the number average molecular weight is less than 400, it is inferior in properties as a soft segment, and a coating film is formed by using the aqueous polyurethane resin dispersion, cracks tend to be easily formed. If the number average molecular weight exceeds 2000, a viscosity of the reaction product of the polycarbonate polyol compound and the polyisocyanate compound is increased, whereby handling of the material sometimes becomes difficult. The number average molecular weight is preferably 500 to 1500, and more preferably 800 to 1200. Here, the number average molecular weight is a value obtained by measuring a hydroxyl value according to JIS K 1557, and calculating (56.1 x 1000 x 2)/hydroxyl value (mg KOH/g) according to the end-group analysis.

For the aqueous polyurethane resin dispersion of the present invention to give a coating film excellent in oleic acid resistance and solvent resistance, it is important to have an alicyclic structure in the polyol portion which is a soft segment. From this point, a content of the alicyclic structure in the polycarbonate polyol compound represented by the formula (1) is preferably 35 to 65% by weight. If the content of the alicyclic structure is within the range, a viscosity of the prepolymer at the time of preparing the aqueous polyurethane resin dispersion can be made within a good range, whereby good handling property can be easily ensured, and good oleic acid resistance and solvent resistance can be provided to the coating film obtained by the aqueous polyurethane resin dispersion. A content of the alicyclic structure is preferably 40 to 60% by weight, particularly preferably 45 to 60% by weight. Here, the content of the alicyclic structure means a weight ratio of the alicyclic group occupied in the polyol compound (a). More specifically, it is the ratio calculated based on the cyclohexane residue (the portion in which two hydrogen atoms are excluded from the cyclohexane), when

n is 1, and based on the cyclopentane residue (the portion in which two hydrogen atoms are excluded from the cyclopentane) when n is 0 in the formula (1).

The polycarbonate polyol compound represented by the formula (1) can be obtained by reacting a corresponding alicyclic structure-containing polyol and a carbonic acid ester compound.

The polycarbonate polyol compound represented by the formula (1) is preferably a polycarbonate polyol compound represented by the formula (1'):

[Formula 4]

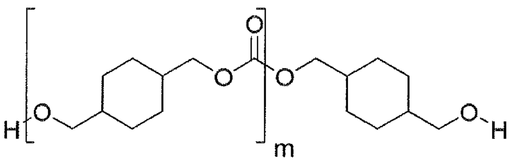

(wherein m has the same meaning as defined above).

The polycarbonate polyol compound represented by the formula (1) may be used alone, or two or more kinds in combination.

(a) The polyol compound may contain other polyol compound(s) (hereinafter called the other polyol compound(s)) other than the polycarbonate polyol compound represented by the formula (1). Provided that the acidic group-containing polyol compound is not contained in (a) the polyol compound.

The other polyol compound(s) may be mentioned a high molecular polyol or low molecular polyol.

The high molecular polyol is not particularly limited, and a polycarbonate diol (excluding the formula (1)), polyester diol, polyether diol, polyacryl polyol, polydiene polyol can be suitably used.

The polycarbonate polyol (excluding the formula (1)) is not particularly limited, and there may be mentioned, for example, a polytetramethylene carbonate diol, polyhexamethylene carbonate diol, etc. Also, a polycarbonate polyol (excluding the formula (1)) having an alicyclic structure can be used, and there may be mentioned, for example, a polycarbonate polyol obtained by reacting a diol having an alicyclic structure at the main chain such as various structural isomers of tricyclodecane dimethanols represented by 1,4-cycloheptane diol, 2,7-norbornane diol, 1,4-bis(hydroxyethoxy)-cyclohexane, tricyclo[5.2.1.$0^{2,6}$]decane dimethanol or a mixture thereof with an aliphatic carbonic acid ester such as dimethylcarbonate, diethylcarbonate, etc., an aromatic carbonic acid ester such as diphenylcarbonate, etc., or a cyclic carbonic acid ester such as ethylenecarbonate, etc.

The polyester polyol is not particularly limited, and there may be mentioned adipate ol, polybutylene adipate diol, polyethylenebutylene adipate diol, polyhexamethylene isophthalate adipate diol, polyethylenesuccinate diol, polybutylene succinate diol, polyethylene sebacate diol, polybutylene sebacate diol, poly-ε-caprolactone diol, poly(3-methyl-1,5-pentylene adipate)diol, a polycondensate of 1,6-hexane diol and dimer acid, etc.

The polyether polyol is not particularly limited, and there may be mentioned polyethylene glycol, polypropylene glycol, polytetramethylene glycol, a random copolymer or a block copolymer of ethylene oxide and propylene oxide, ethylene oxide and butylene oxide, etc. Further, a polyether polyester polyol having an ether bond and an ester bond, etc., can be used.

The polyacryl polyol is not particularly limited, and there may be mentioned, for example, a polyacryl polyol obtained by polymerizing a single material or a mixture selected from the group consisting of an acrylic acid ester having an active hydrogen such as 2-hydroxyethyl acrylate, 2-hydroxypropyl acrylate, 2-hydroxybutyl acrylate, etc., an acrylic acid monoester or a methacrylic acid monoester of glycerin, and an acrylic acid monoester or a methacrylic acid monoester of trimethylolpropane, and a single material or a mixture selected from the group consisting of an acrylic acid ester such as methyl acrylate, ethyl acrylate, isopropyl acrylate, n-butyl acrylate, 2-ethylhexyl acrylate, etc., a methacrylic acid ester having an active hydrogen such as 2-hydroxyethyl methacrylate, 2-hydroxypropyl methacrylate, 2-hydroxybutyl methacrylate, 3-hydroxypropyl methacrylate, 4-hydroxybutyl methacrylate, etc., and a methacrylic acid ester such as methyl methacrylate, ethyl methacrylate, isopropyl methacrylate, n-butyl methacrylate, isobutyl methacrylate, n-hexyl methacrylate, lauryl methacrylate, etc., in the presence of or in the absence of a single material or a mixture selected from the group consisting of an unsaturated carboxylic acid such as acrylic acid, methacrylic acid, maleic acid, itaconic acid, etc., an unsaturated amide such as acrylamide, N-methylol acrylamide, diacetone acrylamide, etc., and other polymerizable monomer(s) such as glycidyl methacrylate, styrene, vinyl toluene, vinyl acetate, acrylonitrile, dibutyl fumarate, etc. The

polymerization method may be mentioned an emulsion polymerization, suspension polymerization, dispersion polymerization, solution polymerization, etc. In the emulsion polymerization, polymerization can be carried out stepwisely.

The polydiene polyol is not particularly limited, and there may be mentioned, a polydiene polyol containing a unit derived from butadiene, isoprene, 1,3-pentadiene, chloroprene, cyclopentadiene, etc. Specific examples thereof may be mentioned a hydroxyl terminated liquid polybutadiene ("Poly bd" available from Idemitsu Kosan Co., Ltd.), bifunctional hydroxyl terminated liquid polybutadiene ("KRASOL" available from Idemitsu Kosan Co., Ltd.), hydroxyl terminated liquid polyisoprene ("Poly ip" available from Idemitsu Kosan Co., Ltd.), hydroxyl terminated liquid polyolefin ("Epol" available from Idemitsu Kosan Co., Ltd.), etc.

The low molecular diol is not particularly limited, and there may be mentioned an aliphatic diol having 2 to 9 carbon atoms such as ethylene glycol, 1,3-propane diol, 2-methyl-1,3-propane diol, 2,2-dimethyl-1,3-propane diol, 2-butyl-2-ethyl-1,3-propane diol, 1,4-butane diol, 1,5-pentane diol, 3-methyl-1,5-pentane diol, 1,6-hexane diol, 1,9-nonane diol, 2-methyl-1,8-octane diol, diethylene glycol, triethylene glycol, tetraethylene glycol, 1,4-benzenedimethanol, etc.; and a diol having an alicyclic structure with 6 to 12 carbon atoms such as 1,4-cyclohexane dimethanol, 1,3-cyclohexane dimethanol, 1,4-cyclohexane diol, 1,4-bis(hydroxyethyl)cyclohexane, 2,7-norbornane diol, tetrahydrofuran dimethanol, 2,5-bis(hydroxymethyl)-1,4-dioxane, etc. Also, a low molecular weight polyvalent alcohol such as trimethylolpropane, pentaerythritol, sorbitol, etc., can be used.

The other polyol compound(s) may be used alone, or two or more kinds in combination. In the point of reactivity with the isocyanate group, a primary alcohol such as 1,4-butane diol, 2,2-dimethyl-1,3-propane diol, 1,4-cyclohexane dimethanol, etc., is preferred.

(b) Polyisocyanate compound

The polyisocyanate compound is not particularly limited, and there may be mentioned, an aromatic polyisocyanate compound such as 1,3-phenylene diisocyanate, 1,4-phenylene diisocyanate, 2,4-tolylene diisocyanate (TDI), 2,6-tolylene diisocyanate, 4,4'-diphenylenemethane diisocyanate (MDI), 2,4-diphenylmethane diisocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthylene diisocyanate, 4,4',4"-triphenylmethane triisocyanate, m-isocyanatophenylsulfonylisocyanate, p-isocyanatophenylsulfonylisocyanate, etc.; an aliphatic polyisocyanate compound such as ethylene diisocyanate, tetramethylene diisocyanate, hexamethylene diisocyanate (HDI), dodecamethylene diisocyanate, 1,6,11-undecane triisocyanate, 2,2,4-trimethylhexamethylene diisocyanate, lysine diisocyanate, 2,6-diisocyanatomethylcaproate, bis(2-isocyanatoethyl)-fumarate, bis(2-isocyanatoethyl)carbonate, 2-isocyanatoethyl-2,6-diisocyanatohexanoate, etc.; and an alicyclic polyisocyanate compound such as isophorone diisocyanate (IPDI), 4,4'-dicyclohexylmethane diisocyanate (hydrogenanted MDI), cyclohexylene diisocyanate, methylcyclohexylene diisocyanate (hydrogenated TDI), bis(2-isocyanatoethyl)-4-cyclohexene-1,2-dicarboxylate, 2,5-norbornane diisocyanate, 2,6-norbornane diisocyanate, etc.

A number of the isocyanate group in the polyisocyanate compound per one molecule is generally 2, but a polyisocyanate having 3 or more isocyanate groups such as triphenylmethane triisocyanate can be used within the range that the polyurethane resin of the present invention is not gelled.

Among the polyisocyanate compounds, in the viewpoints of controlling reactivity and providing strength, etc., it is preferably 4,4'-diphenylenemethane diisocyanate (MDI), isophorone diisocyanate (IPDI), and 4,4'-dicyclohexylmethane diisocyanate (hydrogenated MDI).

The polyisocyanate compound may be used alone, or two or more kinds in combination.

(c) Acidic group-containing polyol compound

The acidic group-containing polyol compound is not particularly limited so long as it is a compound having two or more hydroxyl groups and one or more acidic groups in the molecule. The acidic group may be mentioned a carboxyl group, sulfonic acid group, phosphoric acid group and phenolic hydroxyl group.

The acidic group-containing polyol compound is preferably a compound having two or more hydroxyl groups and one or more carboxyl groups in the molecule, and more preferably a compound having two hydroxyl groups and one carboxyl group in the molecule.

As the acidic group-containing polyol compound, other than the compound having two or more hydroxyl groups and one or more carboxyl groups in the molecule, a polyol compound having a sulfonic acid group, phosphoric acid group or phenolic hydroxyl group as an acidic group may be used.

The acidic group-containing polyol compound may be specifically mentioned a dimethylol alkanoic acid such as 2,2-dimethylol propionic acid, 2,2-dimethylol butanonic acid, etc., N,N-bishydroxyethyl glycine, N,N-bishydroxyethyl alanine, 3,4-dihydroxybutanesulfonic acid, 3,6-dihydroxy-2-toluenesulfonic acid, acidic group-containing polyether polyol, acidic group-containing polyester polyol, etc. Among these, dimethylol alkanoic acid is preferred in the point of availability, and in this case, the alkanoic acid is preferably those having 4 or less carbon atoms, more preferably 2,2-dimethylol propionic acid.

The acidic group-containing polyol compound may be used alone, or two or more kinds in combination.

In the present invention, the hydroxyl equivalent of (a) the polyol compound and (c) the acidic group-containing polyol compound is 180 to 400. If it is less than 180, preparation of the aqueous polyurethane resin dispersion is difficult, while if it exceeds 400, oleic acid resistance and solvent resistance of the coating film obtained by using the aqueous polyurethane resin dispersion are too low in some cases. The hydroxyl equivalent is more preferably 200 to 300.

Here, the hydroxyl equivalent can be calculated from the following formula.

Hydroxyl equivalent of each polyol = Molecular weight of each polyol/Number of OH group of each polyol

Total hydroxyl equivalent =M/total molar number of the polyol

In the above-mentioned formula, M represents [[hydroxyl equivalent of (a) the polyol compound X molar number of the polyol compound]+[hydroxyl equivalent of (c) the acidic group-containing polyol compound X molar number of the acidic group-containing polyol compound]].

In the present invention, the total acid value of (a) the polyol compound, (b) the polyisocyanate compound and (c) the acidic group-containing polyol compound is 22 to 40 mg KOH/g. If it is less than 22 mg KOH/g, dispersibility in an aqueous medium is poor, whereby preparation of the aqueous polyurethane resin dispersion is difficult. Also, if the acid value exceeds 40 mg KOH/g, water resistance of the resulting coating film sometimes low. The acid value is more preferably 23 to 35 mg KOH/g, and further preferably 24 to 30 mg KOH/g. Here, the acid value of (a) the polyol compound, (b) the polyisocyanate compound and (c) the acidic group-containing polyol compound can be obtained from the weights of (a) the polyol compound, (b) the polyisocyanate compound and (c) the acidic group-containing polyol compound, and the acidic group contained in (c) the acidic group-containing polyol compound, and can be calculated from the following formula. When the aqueous polyurethane resin dispersion of the present invention is to be obtained by reacting (a) the polyol compound, (b) the polyisocyanate compound and (c) the acidic group-containing polyol compound to obtain a prepolymer, and then, dispersion in an aqueous medium and chain-elongation by the chain-elongating agent is carried out, the above-mentioned acid value is the same as the acid value of the prepolymer.

[Numerical formula 1]

Acid value = (mmol of acidic group of (c) the acidic group-containing polyol compound x Molecular weight of KOH (56.1))/(Weight (g) of (a) the polyol compound, (b) the polyisocyanate compound and (c) the acidic group-containing polyol compound)

In the present invention, a molar ratio of the hydroxyl group derived from (a) the polyol compound and (c) the acidic group-containing polyol compound, and the isocyanate group derived from (b) the polyisocyanate compound is preferably 1:1.51 to 1:2.5. If it is in the range, a molecular weight of the prepolymer obtained by the reaction of the polyol compound and the polyisocyanate compound can be contained in a suitable range, the defect of increasing the viscosity which causes difficulty in handling can be easily avoided, and the problem that an unreacted monomer becomes large which precipitates at the time of dispersing in water can be also easily avoided. The molar ratio of the hydroxyl group and the isocyanate group is more preferably 1:1.55 to 1:2.4, and further preferably 1:1.6 to 1:2.3. When the molar ratio of the above-mentioned hydroxyl group and the isocyanate group is 1:1.6 to 1:2.3, a viscosity of the urethane prepolymer can be easily controlled to a lower degree, and the necessity of the steps that dispersion in water shall be carried out by adding an organic solvent such as acetone, etc., and then, the above-mentioned organic solvent shall be removed can be reduced so that it is advantageous.

(d) The chain-elongating agent may be mentioned a compound having reactivity with an isocyanate group. They may be mentioned, for example, an amine compound such as ethylenediamine, 1,4-tetramethylenediamine, 2-methyl-1,5-pentanediamine, 1,4-butanediamine, 1,6-hexamethylenediamine, 1,4-hexamethylenediamine, 3-aminomethyl-3,5,5-trimethylcyclohexylamine, 1,3-bis(aminomethyl)cyclohexane, xylylene diamine, piperazine, adipoyl hydrazide, hydrazine, 2,5-dimethylpiperazine, diethylenetriamine, triethylenetetramine, etc., a diol compound such as ethylene glycol, propylene glycol, 1,4-butane diol, 1,6-hexane diol, etc., and a polyalkylene glycol represented

by polyethylene glycol, etc., and of these, preferred are a polyamine compound and a diol compound. There may be further preferable mentioned a primary diamine compound. These may be used alone, or two or more kinds in combination. Chain-elongation can be also carried out by using water, and it is preferred to use water and the other chain-elongating agent (for example, an amine compound, a diol compound) in combination. However, when water alone is used, stability of the aqueous polyurethane resin dispersion is lowered, and sometimes gelled, so that, in the present specification, water alone is used as the chain-elongating agent is excluded.

An amount of (d) the chain-elongating agent can be optionally selected. When the aqueous polyurethane resin dispersion is prepared according to the following mentioned second preparation method, a group having reactivity with the isocyanate group in the chain-elongating agent other than water and the isocyanate group in the prepolymer can be used in amounts with a molar ratio of 2:1 or less. The molar ratio is more preferably 1:1 to 0.8:1.

The preparation method of the aqueous polyurethane resin dispersion of the present invention is not particularly limited, and, for example, there may be mentioned the following preparation processes.

The first preparation process is a process in which whole starting materials are mixed and reacted, and dispersed in an aqueous medium to obtain an aqueous polyurethane resin dispersion.

The second preparation process is a process in which a prepolymer is prepared by reacting (a) the polyol compound, (b) the polyisocyanate compound and (c) the acidic group-containing polyol compound, the acidic group of the above-mentioned prepolymer is neutralized, then, it is dispersed in an aqueous medium, and (d) the chain-elongating agent is reacted to obtain an aqueous polyurethane resin dispersion. The preparation process of the aqueous polyurethane resin dispersion according to the present invention is preferably the second preparation process in the viewpoint of dispersibility.

More specifically, the aqueous polyurethane resin dispersion of the present invention can be obtained by the process comprising the following mentioned steps.

(1) A step of preparing a prepolymer by reacting (a) a polyol compound, (b) a polyisocyanate compound and (c) an acidic group-containing polyol compound;
(2) a step of neutralizing the acidic group in the prepolymer with an acidic group-neutralizing agent;
(3) a step of dispersing the neutralized prepolymer in an aqueous medium; and
(4) a step of reacting the prepolymer dispersed in the aqueous medium with a chain-elongating agent.

The above-mentioned steps (3) and (4) may be carried out simultaneously. Also, a desired aqueous polyurethane resin dispersion can be obtained by dispersing the prepolymer in a solvent other than water, mixing with water, and then, distilling the solvent. In this case, water also acts as the chain-elongating agent.

The reaction can be carried out in a solvent. The solvent is not particularly limited so long as it is substantially not reactive with the isocyanate group, and is a hydrophilic (water-miscible) solvent. There may be mentioned, for example, a ketone such as acetone, ethyl methyl ketone, etc., an ester, an ether such as tetrahydrofuran, N-methylmorpholine, etc., an amide such as dimethylformamide, N-methylpyrrolidone, N-ethylpyrrolidone, etc., and an alcohol. These may be used alone, or two or more kinds in combination. An amount of the above-mentioned solvent to be added is preferably 0 to 100 parts by weight based on 100 parts by weight of the solid component of the prepolymer. If the amount to be added is within the range, no solvent is remained in the obtained coating film, so that lowering in physical properties of the coating film caused by the solvent remained in the coating film can be easily avoided, and on the other hand, the viscosity of the prepolymer can be made within a suitable range which makes dispersibility in water easy to ensure good film-forming property. The amount of the above-mentioned solvent to be added is more preferably 10 to 70 parts by weight, and further preferably 25 to 55 parts by weight.

Also, the reaction can be carried out in the presence of a catalyst. The catalyst is not particularly limited, and there may be mentioned a salt of a metal and an organic or inorganic acid such as tin series catalysts (trimethyl tin laurate, dibutyl tin dilaurate, etc.) and lead series catalysts (lead octoate, etc.), etc., as well as organometal derivatives, amine series catalysts (triethylamine, N-ethylmorpholine, triethylenediamine, etc.), diazabicycloundecene series catalyst, etc. Among these, dibutyl tin dilaurate is preferred in the viewpoint of reactivity.

Neutralization of the acidic group in the prepolymer can be carried out by using an acidic group-neutralizing agent. The acidic group-neutralizing agent may be mentioned organic amines such as trimethylamine, triethylamine, triisopropylamine, tributylamine, triethanolamine, N-methyldiethanolamine, N-phenyldiethanolamine, dimethylethanolamine, diethylethanolamine, N-methylmorpholine, pyridine, etc.; inorganic alkalis such as sodium hydroxide, potassium hydroxide, etc., and ammonia, etc. Among these, preferred are organic amines, more preferably tertiary amines, and most preferably triethylamine. These may be used alone, or two or more kinds in combination.

A viscosity of the prepolymer solution before dispersing in water at 80˚C is preferably 14000 cP or lower. If it is 14000 cP or lower, dispersibility in water is good and an aqueous dispersion can be easily obtained. The viscosity is more preferably 10000 cP or lower, and further preferably 6000 cP or lower. The viscosity herein mentioned can be

measured according to the method described in JIS Z 8803. A solid concentration of the prepolymer solution before dispersing in water can be made 50 to 100% by weight.

The aqueous medium may be mentioned water or a mixed medium comprising water and a hydrophilic organic solvent, etc. The aqueous medium is preferably used in an amount so that a ratio of the polyurethane resin in the aqueous polyurethane resin dispersion becomes 5 to 60% by weight, and more preferably an amount that becomes 20 to 50% by weight.

Water may be mentioned, for example, tap water, ion exchanged water, distilled water, ultrapure water, etc., and preferably ion exchanged water in view of availability and the fact of particles becoming unstable under the influence of salts.

The hydrophilic organic solvent used as the mixed medium may be mentioned the above-mentioned hydrophilic organic solvent. An amount of the hydrophilic organic solvent in the aqueous medium is preferably 20% by weight or less including a solvent when a solvent is used for the preparation of the prepolymer.

In the present invention, an end-terminating agent may be used, if necessary. Specific examples of the end-terminating agent may be mentioned, for example, a monoamine such as n-butylamine, di-n-butylamine, diethanolamine, etc.; a monovalent alcohol such as ethanol, isopropanol, butanol, etc., and these end-terminating agents may be used alone, or two or more kinds in combination. It may be used in combination with the aforementioned chain-elongating agent.

A number average molecular weight of the polyurethane resin in the aqueous polyurethane resin dispersion is, in general, 5000 to 1,000,000, preferably 10,000 to 500,000.

[Paint composition and coating agent]

The present invention also relates to a paint composition or coating agent containing the above-mentioned aqueous polyurethane resin dispersion.

To the paint composition and coating agent, the other resin may be contained in addition to the above-mentioned aqueous polyurethane resin dispersion. The other resin may be mentioned a polyester resin, acrylic resin, polyether resin, polycarbonate resin, polyurethane resin, epoxy resin, alkyd resin, polyolefin resin, etc. These may be used alone, or two or more kinds in combination.

The other resin preferably has one kind or more of hydrophilic groups, and the hydrophilic group may be mentioned a hydroxyl group, carboxyl group, sulfonic acid group, etc.

The other resin is preferably at least one selected from the group consisting of a polyester resin, acrylic resin and polyolefin resin.

When the polyester resin or the acrylic resin has a hydroxyl group(s), the so-called urethane-modified polyester resin or urethane-modified acrylic resin in which these resins are elongated to high molecular weight polymer by subjecting a part or whole of the hydroxyl group in the resin and the polyisocyanate compound to urethanization reaction may be used in combination.

The polyester resin can be generally prepared by an esterification reaction or transesterification reaction of an acid component and an alcohol component. The acid component is a compound which is generally used as an acid component for the preparation of a polyester resin, and may be mentioned, for example, an aliphatic polybasic acid, alicyclic polybasic acid, aromatic polybasic acid, etc.

The hydroxyl value of the polyester resin is preferably 10 to 300 mg KOH/g, more preferably 50 to 250 mg KOH/g, and further preferably 80 to 180 mg KOH/g. The acid value of the above-mentioned polyester resin is preferably 1 to 200 mg KOH/g, more preferably 15 to 100 mg KOH/g, and further preferably 25 to 60 mg KOH/g. The weight average molecular weight of the polyester resin is preferably 500 to 500,000, more preferably 1,000 to 300,000, and further preferably 1,500 to 200,000. In the present specification, a weight average molecular weight measured by gel permeation chromatography (in terms of polystyrene).

The acrylic resin is preferably a hydroxyl group-containing acrylic resin. The hydroxyl group-containing acrylic resin can be prepared by copolymerizing a hydroxyl group-containing polymerizable unsaturated monomer and other polymerizable unsaturated monomer(s) which is/are copolymerizable with the monomer by already known process, for example, the solution polymerization method in an organic solvent, the emulsion polymerization method in water, etc.

The hydroxyl group-containing polymerizable unsaturated monomer is not particularly limited so long as it is a compound having both one or more hydroxyl group(s) and polymerizable unsaturated bond(s) in one molecule, and may be mentioned monoesterified products of a (meth)acrylic acid and a divalent alcohol with a carbon number of 2 to 8, such as 2-hydroxyethyl (meth)acrylate, 2-hydroxypropyl (meth)acrylate, 3-hydroxypropyl (meth)acrylate, 4-hydroxybutyl (meth)acrylate; ε-caprolactone-modified products of these monoesterified products; N-hydroxymethyl (meth)acrylamide; allyl alcohol; a (meth)acrylate having a polyoxyethylene chain, the molecular ends of which are hydroxyl group (s), etc.

The hydroxyl group-containing acrylic resin preferably contains an anionic functional group. The hydroxyl group-containing acrylic resin having an anionic functional group can be prepared by, for example, using a polymerizable

unsaturated monomer having an anionic functional group such as a carboxylic acid group, phosphoric acid group, sulfone group, etc., as one of the polymerizable unsaturated monomers.

The hydroxyl value of the above-mentioned hydroxyl group-containing acrylic resin is preferably 1 to 200 mg KOH/g, more preferably 2 to 100 mg KOH/g, and further preferably 3 to 60 mg KOH/g in the viewpoints of storage stability and water resistance of the resulting coating film, etc.

When the hydroxyl group-containing acrylic resin has an acidic group such as a carboxyl group, etc., an acid value of said hydroxyl group-containing acrylic resin is preferably 1 to 200 mg KOH/g or so in the viewpoint of water resistance, etc., of the obtained coating film, more preferably 2 to 150 mg KOH/g or so, and further preferably 5 to 100 mg KOH/g or so.

A weight average molecular weight of the hydroxyl group-containing acrylic resin is preferably 1,000 to 200,000, more preferably 2,000 to 100,000, and further preferably 3,000 to 50,000.

The polyether resin may be mentioned a polymer or copolymer having an ether bond, and, for example, a polyoxyethylene series polyether, polyoxypropylene series polyether, polyoxybutylene series polyether, a polyether derived from an aromatic polyhydroxy compound such as bisphenol A and bisphenol F, etc., may be mentioned.

The polycarbonate resin may be mentioned a polymer produced by a bisphenol compound, and, for example, bisphenol A·polycarbonate, etc., may be mentioned.

The polyurethane resin may be mentioned a resin having a urethane bond obtained by the reaction of various kinds of polyol component(s) such as acryl polyol, polyester polyol, polyether polyol, polycarbonate polyol, etc., and a polyisocyanate compound.

The epoxy resin may be mentioned a resin obtained by the reaction of a bisphenol compound and epichlorohydrin, etc. The bisphenol compound may be mentioned, for example, bisphenol A and bisphenol F.

The alkyd resin may be mentioned a resin obtained by reacting a polybasic acid such as phthalic acid, terephthalic acid, succinic acid, etc., with a polyvalent alcohol, and further reacting a modifier such as oil and fats, oil and fats fatty acid (soybean oil, linseed oil, coconut oil, stearic acid, etc.), natural resin (rosin, amber, etc.), etc.

The polyolefin resin may be mentioned a resin obtained by emulsifying a polyolefin resin which can be obtained by polymerizing an olefin type monomer or copolymerizing it with other monomer(s) optionally according to the usual polymerization method, using an emulsifier in water, or by subjecting to emulsion polymerization of an olefin type monomer (s) with other monomer(s) optionally. Also, in some cases, the so-called chlorinated polyolefin-modified resin in which the above-mentioned polyolefin resin is chlorinated may be used.

The olefin type monomer may be mentioned, for example, α-olefins such as ethylene, propylene, 1-butene, 3-methyl-1-butene, 4-methyl-1-pentene, 3-methyl-1-pentene, 1-heptene, 1-hexene, 1-decene, 1-dodecene, etc.; conjugate diene or unconjugated diene such as butadiene, ethylidene norbornene, dicyclopentadiene, 1,5-hexadiene, styrenes, etc., and these monomers may be used alone, or two or more in combination.

The other monomer copolymerizable with the olefin type monomer may be mentioned, for example, vinyl acetate, vinyl alcohol, maleic acid, citraconic acid, itaconic acid, maleic anhydride, citraconic anhydride, itaconic anhydride, etc., and these monomers may be used alone, or two or more kinds in combination.

By adding a curing agent to the paint composition and coating agent of the present invention, water resistance, etc., of the coating film or multi-layer coating film, or a paint film prepared by using the paint composition or coating agent can be improved.

The curing agent may be mentioned, for example, an amino resin, polyisocyanate compound, blocked polyisocyanate compound, melamine resin, carbodiimide, etc. The above-mentioned curing agent may be used alone, or two or more kinds in combination.

The amino resin may be mentioned a partially or completely methylolated amino resin obtained by the reaction of an amino component and an aldehyde component. The amino component may be mentioned melamine, urea, benzoguanamine, acetoguanamine, steroguanamine, spiroguanamine, dicyanediamide, etc. The aldehyde component may be mentioned formaldehyde, paraformaldehyde, acetaldehyde, benzaldehyde, etc.

The polyisocyanate compound may be mentioned a compound having 2 or more isocyanate groups in one molecule, and specifically mentioned, for example, hexamethylene diisocyanate, trimethylhexamethylene diisocyanate, etc. The blocked polyisocyanate compound may be mentioned those obtained by adding a blocking agent to the polyisocyanate group of the above-mentioned polyisocyanate compound, and the blocking agent may be mentioned a phenol type blocking agent such as phenol, cresol, etc., aliphatic alcohol type one such as methanol, ethanol, etc., active methylene type one such as dimethyl malonate, acetyl acetone, etc., mercaptane type one such as butyl mercaptane, dodecyl mercaptane, etc., acid amide type one such as acetanilide, acetic amide, etc., lactam type one such as ε-caprolactam, δ-valerolactam, etc., acid imide type one such as succinimide, maleimide, etc., oxime type one such as acetaldoxime, acetone oxime, methyl ethyl ketoxime, etc., and amine type one such as diphenylaniline, aniline, ethyleneimine, etc.

The melamine resin may be mentioned methylol melamines such as dimethylol melamine, trimethylol melamine, etc.; alkyl etherified products or condensates of these methylol melamines; condensates of the alkyl etherified products

of methylol melamines, etc.

To the paint composition and coating agent of the present invention, a colored pigment, an extender pigment and/or a lustrous pigment may be added.

The colored pigment may be mentioned titanium oxide, zinc white, carbon black, molybdenum red, Prussian blue, cobalt blue, azo pigment, phthalocyanine pigment, quinacridone pigment, isoindoline pigment, threne-based pigment, perylene pigment, etc. These may be used alone, or two or more kinds in combination. In particular, it is preferred to use titanium oxide and/or carbon black as the colored pigment.

The extender pigment may be mentioned clay, kaolin, barium sulfate, barium carbonate, calcium carbonate, talc, silica, alumina white, etc. These may be used alone, or two or more kinds in combination. In particular, it is preferred to use barium sulfate and/or talc as the extender pigment, and it is more preferred to use barium sulfate.

The above-mentioned photoluminescent pigment may be mentioned aluminum, copper, zinc, brass, nickel, aluminum oxide, mica, aluminum oxide coated by titanium oxide or iron oxide, mica coated by titanium oxide or iron oxide, etc.

The paint composition and coating agent of the present invention can contain an additive(s) for usual paint such as a thickening agent, curing catalyst, UV absorber, photostabilizer, defoaming agent, plasticizer, surface adjuster, anti-sediment agent, etc., which may be used alone, or two or more kinds in combination.

The preparation method of the paint composition and coating agent of the present invention is not particularly limited, and a conventionally known preparation method may be employed. In general, the paint composition and coating agent can be prepared by mixing the aqueous polyurethane resin dispersion with the above-mentioned various kinds of additives, adding an aqueous medium, and regulating the viscosity suitable for the coating method.

The material to be coated by the paint composition or the material to be coated by the coating agent is not particularly limited and may be mentioned a metal, plastic, inorganic material, etc.

The coating method of the paint composition or the coating method of the coating agent is not particularly limited and may be mentioned a bell coating, spray coating, roll coating, shower coating, dip coating, etc.

[Composition for synthetic leather]

The present invention also relates to a composition for synthetic leather containing the above-mentioned aqueous polyurethane resin dispersion.

The composition for synthetic leather of the present invention may contain, in addition to the above-mentioned aqueous polyurethane resin dispersion, an additive which can be generally used such as a photostabilizer, thermal stabilizer, UV absorber, antioxidant, antiseptic, antifungal agent, antistatic agent, flame retardant, blocking preventive, filler, thickening agent, water, dye, pigment, pigment dispersing agent, etc.

The present invention also relates to synthetic leather obtained by using the above-mentioned composition for synthetic leather. The synthetic leather can be obtained by laminating a fibrous base material and an urethane film obtained by the above-mentioned composition for synthetic leather by using a conventionally known method such as the dry laminating method, wet laminating method, impregnating method, coating method, etc., or impregnating the above-mentioned composition for synthetic leather into the above-mentioned fibrous base material. When the dry laminating method or the wet laminating method is employed, the composition for synthetic leather is coated on a release paper using a knife coater, etc., after drying, etc., it is laminated with a fibrous base material optionally using an adhesive, etc., and heat treated to obtain synthetic leather. Also, in the impregnating method, the composition for synthetic leather diluted to a solid concentration to 10 to 30% by weight is impregnated into raised fabric woven, etc., squeezing the same with mangle, etc., and subjecting to heat treatment to obtain synthetic leather. Moreover, in the coating method, the composition for synthetic leather is laminated on a fibrous base material using a knife coater or a roller coater, and subjected to heat treatment to obtain synthetic leather.

The fibrous base material may be mentioned woven fabric, nonwoven fabric, knitted fabric, etc. The fibrous base material may be a material raised on one surface or both surfaces.

Synthetic leather of the present invention may be subjected to embossing by embossing rollers, etc., or crease process, and a top coating layer may be formed on the surface of synthetic leather. Synthetic leather of the present invention is excellent in oleic acid resistance, so that it is particularly excellent for the uses of the products to which hands are frequently touched such as sofa, chair, interior material of vehicles, surface skin material of vehicle sheet, or products to which sweat is easily attached.

EXAMPLES

In the following, the present invention will be explained specifically by referring to Examples, but the scope of the present invention is not limited by these examples.

[Example 1]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 200 g), 2,2-dimethylol propionic acid (29.7 g), 1,4-butane diol (1.3 g) and hydrogenated MDI (197 g) were heated in N-methylpyrrolidone (NMP, 180 g) in the presence of dibutyl tin dilaurate (0.4 g) under nitrogen atmosphere at 80 to 90˚C for 6 hours. An NCO group content at the time of completion of the urethanization reaction was 4.13% by weight. The reaction mixture was cooled to 80˚C, and triethylamine (22.2 g) was added thereto and mixed. The viscosity at this time was 4600 cP. Among the reaction mixture, 488 g thereof was taken out and added to water (767 g) under vigorous stirring. Then, 35% by weight 2-methyl-1,5-pentane diamine aqueous solution (MPMD aqueous solution, 72 g) was added to the dispersion to obtain an aqueous polyurethane resin dispersion. Incidentally, measurement of the NCO group content at the time of completion of the urethanization reaction was carried out as follows. 0.5 g of an urethane prepolymer solution was injected into 10 mL (milliliter) of 0.1 mol/L (liter) dibutylamine-tetrahydrofuran (THF) solution and dissolved therein, and further 40 mL of THF was added thereto and mixed. Bromophenol Blue-methanol solution was used as an indicator, and neutralization titration was carried out using 0.1 mol/L hydrochloric acid. From the resulting titrated amount, a concentration of the NCO group is calculated in terms of a weight.

[Example 2]

In a reaction vessel equipped with a stirrer and a heating device, ETERNACOLL UC100 (available from Ube Industries, Ltd.; a number average molecular weight 1030; hydroxyl value: 109 mg KOH/g; a content of an alicyclic structure: 50% by weight; polycarbonate diol obtained by reacting 1,4-cyclohexane dimethanol and carbonic acid ester, 230 g), 2,2-dimethylol propionic acid (30 g) and hydrogenated MDI (255 g) were heated in N-ethylpyrrolidone (NEP, 205 g) in the presence of dibutyl tin dilaurate (0.4 g) under nitrogen atmosphere at 80 to 90˚C for 6 hours. An NCO group content at the time of completion of the urethanization reaction was 5.38% by weight. The reaction mixture was cooled to 80˚C, and triethylamine (22.3 g) was added thereto and mixed. The viscosity at this time was 3100 cP. Among the reaction mixture, 649 g thereof was taken out and added to water (877 g) under vigorous stirring. Then, 35% by weight 2-methyl-1,5-pentane diamine aqueous solution (MPMD aqueous solution, 125 g) was added to the dispersion to obtain an the aqueous polyurethane resin dispersion.

[Example 3]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 69.9 g), 1,4-butane diol (4.2 g), 2,2-dimethylol propionic acid (13.2 g) and hydrogenated MDI (108 g) were heated in N-ethylpyrrolidone (NEP, 82.2 g) in the presence of dibutyl tin dilaurate (0.1 g) under nitrogen atmosphere at 80 to 90˚C for 5 hours. An NCO group content at the time of completion of the urethanization reaction was 5.72% by weight. The reaction mixture was cooled to 80˚C, and triethylamine (9.7 g) was added thereto and mixed. The viscosity at this time was 1400 cP. Among the reaction mixture, 246 g thereof was taken out and added to water (389 g) under vigorous stirring. Then, 35% by weight 2-methyl-1,5-pentane diamine aqueous solution (MPMD aqueous solution, 51 g) was added to the dispersion to obtain an aqueous polyurethane resin dispersion.

[Example 4]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 85.3 g), 2,2-dimethylol propionic acid (11.8 g) and hydrogenated MDI (69.4 g) were heated in N-methylpyrrolidone (NMP, 69.6 g) in the presence of dibutyl tin dilaurate (0.1 g) under nitrogen atmosphere at 80 to 90˚C for 6 hours. An NCO group content at the time of completion of the urethanization reaction was 2.92% by weight. The reaction mixture was cooled to 80˚C, and triethylamine (8.5 g) was added thereto and mixed. The viscosity at this time was 16000 cP. Among the reaction mixture, 150 g thereof was taken out, 500 ml of acetone was added thereto, and the resulting mixture was added to water (190 g) under vigorous stirring. Then, 35% by weight 2-methyl-1,5-pentane diamine aqueous solution (MPMD aqueous solution, 16.2 g) was added to the dispersion, and acetone was distilled off under reduced pressure to obtain an aqueous polyurethane resin dispersion.

[Example 5]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 110 g), 2,2-dimethylol propionic acid (15.4 g) and isophorone diisocyanate (IPDI, 85.9 g) were heated in N-methylpyrrolidone (NMP, 90.4 g) in the presence of dibutyl tin dilaurate (0.1 g) under nitrogen atmosphere at 80 to 90˚C for 6 hours. An NCO group content at the time of completion of the urethanization reaction was 4.15% by weight. The reaction mixture was cooled to 80˚C, and triethylamine (11.3 g) was added thereto and mixed. The viscosity at this time was 1900 cP. Among the reaction mixture, 245 g thereof was taken out and added to water (334 g) under vigorous stirring. Then, 35% by weight 2-methyl-1,5-pentane diamine aqueous solution (MPMD aqueous solution, 34.6 g) was added to the dispersion to obtain an aqueous polyurethane resin dispersion.

[Comparative example 1]

In a reaction vessel equipped with a stirrer, a reflux condenser and a thermometer, ETERNACOLL UM90 (3/1) (available from Ube Industries, Ltd.; a number average molecular weight 916; hydroxyl value: 123 mg KOH/g; a content of an alicyclic structure: 39% by weight; polycarbonate diol obtained by reacting a polyol mixture in which the polyol component comprises a molar ratio of 1,4-cyclohexane dimethanol:1,6-hexane diol=3:1 with carbonic acid ester, 1500 g), 2,2-dimethylol propionic acid (220 g) and hydrogenated MDI (1450 g) were heated in N-methylpyrrolidone (NMP, 1350 g) in the presence of dibutyl tin dilaurate (2.6 g) under nitrogen atmosphere at 80 to 90˚C for 6 hours. An NCO group content in the prepolymer at the time of completion of the urethanization reaction was 3.97% by weight. The reaction mixture was cooled to 80˚C, and triethylamine (149 g) was added thereto and mixed. The viscosity at this time was 2000 cP. Among the reaction mixture, 4360 g thereof was taken out and added to water (6900 g) under vigorous stirring. Then, 35% by weight of 2-methyl-1,5-pentane diamine aqueous solution (MPMD aqueous solution, 626 g) was added to the dispersion to obtain an aqueous polyurethane resin dispersion.

[Comparative example 2]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 49.8 g), 1,4-butane diol (8.1 g), 2,2-dimethylol propionic acid (12.6 g) and hydrogenated MDI (116 g) were heated in N-methylpyrrolidone (NMP, 79.7 g) in the presence of dibutyl tin dilaurate (0.1 g) under nitrogen atmosphere at 80 to 90˚C for 6 hours. An NCO group content at the time of completion of the urethanization reaction was 6.35% by weight. The reaction mixture was cooled to 80˚C, and triethylamine (12.6 g) was added thereto and mixed. The viscosity at this time was 700 cP. Among the reaction mixture, 231 g thereof was taken out and added to water (365 g) under vigorous stirring. Then, 35% by weight of 2-methyl-1,5-pentane diamine aqueous solution (MPMD aqueous solution, 53.1 g) was added to the dispersion, but it was gelled and no aqueous polyurethane resin dispersion could be obtained.

[Comparative example 3]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 100 g), 2,2-dimethylol propionic acid (9.5 g) and hydrogenated MDI (87.6 g) were heated in N-methylpyrrolidone (NMP, 90.7 g) in the presence of dibutyl tin dilaurate (0.2 g) under nitrogen atmosphere at 80 to 90˚C for 6 hours. An NCO group content at the time of completion of the urethanization reaction was 4.46% by weight. The reaction mixture was cooled to 80˚C, and triethylamine (7.0 g) was added thereto and mixed. The viscosity at this time was 1700 cP. Among the reaction mixture, 222 g thereof was taken out and added to water (365 g) under vigorous stirring. However, the dispersion was gelled and no aqueous polyurethane resin dispersion can be obtained.

[Comparative example 4]

In a reaction vessel equipped with a stirrer, a reflux condenser and a thermometer, ETERNACOLL UM90 (3/1) (available from Ube Industries, Ltd.; a number average molecular weight 916; hydroxyl value: 123 mg KOH/g; a content of an alicyclic structure: 39% by weight; polycarbonate diol obtained by reacting a polyol mixture in which the polyol component comprises a molar ratio of 1,4-cyclohexane dimethanol: 1,6-hexane diol=3:1 with carbonic acid ester, 175

g), 2,2-dimethylol propionic acid (26.0 g) and isophorone diisocyanate (IPDI, 142 g) were heated in N-methylpyrrolidone (NMP, 137 g) in the presence of dibutyl tin dilaurate (0.3 g) under nitrogen atmosphere at 80 to 90˚C for 6 hours. An NCO group content at the time of completion of the urethanization reaction was 4.29% by weight. The reaction mixture was cooled to 80˚C, and triethylamine (19.6 g) was added thereto and mixed. The viscosity at this time was 1800 cP. Among the reaction mixture, 404 g thereof was taken out and added to water (535 g) under vigorous stirring. Then, 35% by weight 2-methyl-1,5-pentane diamine aqueous solution (MPMD aqueous solution, 60.9 g) was added to the dispersion to obtain an aqueous polyurethane resin dispersion.

[Comparative example 5]

In a reaction vessel equipped with a stirrer and a heating device, ETERNACOLL UC100 (available from Ube Industries, Ltd.; a number average molecular weight 964; hydroxyl value: 116 mg KOH/g; a content of an alicyclic structure: 50% by weight; polycarbonate diol obtained by reacting 1,4-cyclohexane dimethanol and carbonic acid ester, 100 g), 2,2-dimethylol propionic acid (14.8 g), 1,4-butane diol (0.7 g) and hydrogenated MDI (98.6 g) were heated in N-methylpyrrolidone (NMP, 90.0 g) in the presence of dibutyl tin dilaurate (0.2 g) under nitrogen atmosphere at 80 to 90˚C for 6 hours. An NCO group content at the time of completion of the urethanization reaction was 3.86% by weight. The reaction mixture was cooled to 80˚C, and triethylamine (11.1 g) was added thereto and mixed. The viscosity at this time was 4600 cP. Among the reaction mixture, 239 g thereof was taken out and added to water (418 g) under vigorous stirring without adding a chain-elongating agent. The dispersion was gelled after several hours, and an aqueous polyurethane resin dispersion could not be obtained.

[Measurement of viscosity]

By using E-type viscometer (manufactured by Toki Sangyo Co., Ltd., TV22), measurement was carried out under the measurement conditions of (Temperature: 80˚C, Rotor: 3˚ × 12R, Rotation speed: 10 rpm).
(Oleic acid resistance and solvent resistance)

[Preparation of samples for fats resistance and solvent resistance]

Each of the aqueous polyurethane resin dispersions of Examples and Comparative examples was uniformly coated on a glass plate so that a film thickness after drying became about 30 μm. Then, the film was dried at 80˚C for 1 hour, and then, dried at 120 ˚C for 4 hours. The obtained polyurethane resin films were applied to evaluations of the following mentioned oleic acid resistance and solvent resistance.

[Evaluations of oleic acid resistance and solvent resistance]

The polyurethane resin films obtained as mentioned above were immersed in oleic acid and Solvesso 100 each for 24 hours to measure a swelling ratio, whereby the oleic acid resistance and solvent resistance were evaluated. The swelling ratio was obtained by using the following equation.

$$\text{Swelling ratio} = \text{Weight after the test}/\text{Weight before the test X } 100(\%)$$

The smaller the swelling ratio is, the better the resistance is.

(Evaluation of hardness)

[Preparation of samples for pencil hardness]

Each of the aqueous polyurethane resin dispersions of Examples and Comparative examples was uniformly coated on a glass plate so that a film thickness after drying became about 20 μm. Then, the film was dried at 80˚C for 5 hours, and then, dried at 100 ˚C for 17 hours. The obtained polyurethane resin coating films were applied to evaluation of pencil hardness measurement.

[Measurement of pencil hardness]

In a laminated material of a glass plate and the polyurethane resin coating film obtained above, pencil hardness

of the resin coating film was measured by the method according to JIS K 5600-5-4.

[NCO/OH]

In Table 1, "NCO/OH" represents a molar ratio of the hydroxyl group derived from (a) the polyol compound and (c) the acidic group-containing polyol compound, and the isocyanate group derived from (b) the polyisocyanate compound at the time of preparing the urethane prepolymer.

[Table 1]

| | Example 1 | Example 2 | Example 3 | Example 4 | Example 5 |
|---|---|---|---|---|---|
| PCD | UC100 | UC100 | UC100 | UC100 | UC100 |
| Isocyanate | H12MDI | H12MDI | H12MDI | H12MDI | IPDI |
| NCO/OH | 1.69 | 2.17 | 1.89 | 1.50 | 1.69 |
| OH equivalent | 260 | 290 | 200 | 280 | 270 |
| Acid value (mg KOH/g) | 29 | 24 | 28 | 30 | 30 |
| Chain-elongating agent | MPMD/ water | MPMD/ water | MPMD/ water | MPMD/ water | MPMD/ water |
| Viscosity (80˚C, cP) | 4600 | 3100 | 1400 | 16000 | 1900 |
| Dispersed state | ○ | ○ | ○ | ○ | ○ |
| Oleic acid resistance (%) | 110 | 110 | 110 | 110 | 110 |
| Solvent resistance (%) | 110 | 120 | 110 | 110 | 110 |
| Pencil hardness | HB | HB | HB | HB | HB |

[Table 2]

| | Comparative example 1 | Comparative example 2 | Comparative example 3 | Comparative example 4 | Comparative example 5 |
|---|---|---|---|---|---|
| PCD | UM90 (3/1) | UC100 | UC100 | UM90 (3/1) | UC100 |
| Isocyanate | H12MDI | H12MDI | H12MDI | IPDI | H12MDI |
| NCO/OH | 1.69 | 1.88 | 1.91 | 1.66 | 1.70 |
| OH equivalent | 260 | 150 | 310 | 260 | 260 |
| Acid value (mg KOH/g) | 29 | 28 | 20 | 32 | 29 |
| Chain-elongating agent | MPMD/-water | MPMD/-water | MPMD/-water | MPMD/-water | Water |
| Viscosity (80˚C, cP) | 2500 | 700 | 1700 | 1800 | 4600 |
| Dispersed state | ○ | Gelled | Gelled | ○ | Gelled |
| Oleic acid resistance (%) | 120 | — | — | 110 | — |
| Solvent resistance (%) | 150 | — | — | 140 | — |

(continued)

| | Comparative example 1 | Comparative example 2 | Comparative example 3 | Comparative example 4 | Comparative example 5 |
|---|---|---|---|---|---|
| Pencil hardness | HB | — | — | HB | — |

UTILIZABILITY IN INDUSTRY

The aqueous polyurethane resin dispersion of the present invention can provide a coating film having high hardness as well as excellent oleic acid resistance and solvent resistance, so that it has high utility in the fields of a paint, coating agent and synthetic leather.

## Claims

**1.** An aqueous polyurethane resin dispersion comprising a polyurethane resin obtained by reacting (a) a polyol compound, (b) a polyisocyanate compound, (c) an acidic group-containing polyol compound and (d) a chain-elongating agent being dispersed in an aqueous medium, wherein

(a) the polyol compound comprises a polycarbonate polyol compound represented by the formula (1):

[Formula 5]

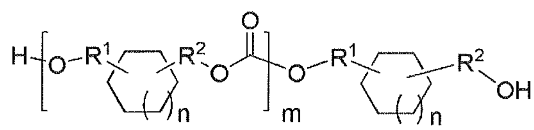

(1)

(wherein
$R^1$ and $R^2$ each independently represent a direct bond or an aliphatic hydrocarbon group having 1 to 10 carbon atoms which may have a substituent(s),
n is 0 or 1,
m is a number which makes a number average molecular weight of the formula (1) 400 to 2000),

a hydroxyl equivalent of (a) the polyol compound and (c) the acidic group-containing polyol compound is 180 to 400, and
a total acid value of (a) the polyol compound, (b) the polyisocyanate compound and (c) the acidic group-containing polyol compound is 22 to 40 mg KOH/g.

**2.** The aqueous polyurethane resin dispersion according to Claim 1, wherein a content of an alicyclic structure in (a) the polyol compound is 35 to 65% by weight.

**3.** The aqueous polyurethane resin dispersion according to Claim 1 or 2, wherein (a) the polyol compound is a polycarbonate polyol compound represented by the formula (1'):

[Formula 6]

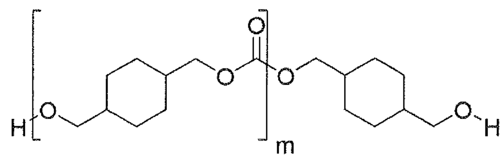

Formula (1')

(wherein m is a number which makes a number average molecular weight of the formula (1') 400 to 2000).

**4.** The aqueous polyurethane resin dispersion according to any one of Claims 1 to 3, wherein a polyurethane resin obtained by reacting a prepolymer which is obtained by reacting (a) the polyol compound, (b) the polyisocyanate compound and (c) the acidic group-containing polyol compound with (d) the chain-elongating agent, is dispersed in an aqueous medium.

**5.** The aqueous polyurethane resin dispersion according to Claim 4, wherein the prepolymer is in a form of a prepolymer solution with 14000 cP or lower at 80˚C.

**6.** The aqueous polyurethane resin dispersion according to any one of Claims 1 to 5, wherein a molar ratio of a hydroxyl group derived from (a) the polyol compound and (c) the acidic group-containing polyol compound and an isocyanate group derived from (b) the polyisocyanate compound is 1:1.51 to 1:2.5.

**7.** A paint composition comprising the aqueous polyurethane resin dispersion according to any one of Claims 1 to 6.

**8.** A coating agent composition containing the aqueous polyurethane resin dispersion according to any one of Claims 1 to 6.

**9.** A composition for synthetic leather containing the aqueous polyurethane resin dispersion according to any one of Claims 1 to 6.

**10.** A synthetic leather comprising a fiber base material treated by the composition for synthetic leather according to Claim 9.

**11.** A process for preparing the aqueous polyurethane resin dispersion according to any one of Claims 1 to 6, which comprises the steps of

(1) a step of preparing a prepolymer by reacting (a) the polyol compound, (b) the polyisocyanate compound and (c) the acidic group-containing polyol compound;
(2) a step of neutralizing an acidic group in the prepolymer with an acidic group-neutralizing agent;
(3) a step of dispersing the neutralized prepolymer in an aqueous medium; and
(4) a step of reacting the prepolymer dispersed in the aqueous medium and (d) a chain-elongating agent.

**INTERNATIONAL SEARCH REPORT**

International application No. PCT/JP2010/069789

A. CLASSIFICATION OF SUBJECT MATTER
*C08G18/44*(2006.01)i, *C08G18/00*(2006.01)i, *C09D5/02*(2006.01)i, *C09D169/00*(2006.01)i, *C09D175/04*(2006.01)i, *D06N3/14*(2006.01)i

According to International Patent Classification (IPC) or to both national classification and IPC

B. FIELDS SEARCHED

Minimum documentation searched (classification system followed by classification symbols)
C08G18/00-87, C09D5/02-175/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2-306427 A (Nippon Polyurethane Industry Co., Ltd.), 19 December 1990 (19.12.1990), claims; page 3, lower right column, line 11 to page 4, upper left column, line 5; page 6, lower right column, lines 11 to 18 & US 5124424 A | 1-11 |
| P,A | WO 2009/145242 A1 (Ube Industries, Ltd.), 03 December 2009 (03.12.2009), claims 1 to 14 (Family: none) | 1-11 |
| P,A | WO 2010/004951 A1 (Ube Industries, Ltd.), 14 January 2010 (14.01.2010), claims 1 to 8 (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 February, 2011 (01.02.11) | 22 February, 2011 (22.02.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2010/069789

C (Continuation). DOCUMENTS CONSIDERED TO BE RELEVANT

| Category* | Citation of document, with indication, where appropriate, of the relevant passages | Relevant to claim No. |
|---|---|---|
| P,A | WO 2010/098316 A1 (Ube Industries, Ltd.), 02 September 2010 (02.09.2010), claims 1 to 10 (Family: none) | 1-11 |
| A | JP 6-248046 A (Toagosei Chemical Industry Co., Ltd.), 06 September 1994 (06.09.1994), claim 1 (Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06248046 A
- JP 2008303285 A